# FASCICULE DE BREVET EUROPEEN

(11) **EP 4 185 947 B1**
(45) Date de publication et mention de la délivrance du brevet: **10.06.2026**
(21) Numéro de dépôt: 21746735.6
(22) Date de dépôt: 20.07.2021
(51) Int. Cl.: G06F 7/58

(54) **GÉNÉRATEUR PHYSIQUE CHAOTIQUE DE NOMBRES ALÉATOIRES VRAIS ET PROCÉDÉ ASSOCIÉ**
CHAOTISCHER PHYSIKALISCHER ECHTER ZUFALLSZAHLENGENERATOR UND ZUGEHÖRIGES VERFAHREN
CHAOTIC PHYSICAL TRUE RANDOM NUMBER GENERATOR AND ASSOCIATED METHOD

(30) Priorité: 23.07.2020 FR 2007766
(43) Date de publication de la demande: 31.05.2023
(73) Titulaire: Université Grenoble Alpes, 38400 Saint-Martin-d'Hères (FR); Centre National de la Recherche Scientifique, 75016 Paris (FR); Institut Polytechnique de Grenoble, 38000 Grenoble (FR)
(72) Inventeur: DEFOORT, Martial, Joseph, 38000 Grenoble (FR); BASROUR, Skandar, 38000 Grenoble (FR); FESQUET, Laurent, René, 38360 Sassenage (FR)
(74) Mandataire: Hautier IP
(86) Numéro de dépôt international: PCT/EP2021/070299
(87) Numéro de publication internationale: WO 2022/018099

(56) Documents cités:
- CHEN QINGFEI: "Nonlinear dynamics, control and shock mitigation in microelectromechanical and nanoelectromechanical resonant devices", 1 May 2010 (2010-05-01), pages 1 - 24, XP055785956, ISBN: 978-1-124-03153-8, Retrieved from the Internet <URL:https://search.proquest.com/docview/506683317> [retrieved on 20210315]
- GHOSH DIA ET AL: "Generation & control of chaos in a single loop optoelectronic oscillator", OPTIK., vol. 165, 1 July 2018 (2018-07-01), DE, pages 275 - 287, XP055785930, ISSN: 0030-4026, DOI: 10.1016/j.ijleo.2018.02.010
- CHEN QINGFEI: "Nonlinear dynamics, control and shock mitigation in microelectromechanical and nanoelectromechanical resonant devices", 1 May 2010 (2010-05-01), pages 56 - 71, XP055785998, ISBN: 978-1-124-03153-8, Retrieved from the Internet <URL:https://search.proquest.com/docview/506683317> [retrieved on 20210315]

## Description

### DOMAINE TECHNIQUE

La présente invention concerne le domaine des dispositifs et procédés de génération de nombres aléatoires vrais. La présente invention concerne plus particulièrement, selon deux de ses aspects, un générateur physique chaotique de nombres aléatoires vrais et le procédé de génération qui lui est associé. Par exemple, la génération de nombres aléatoires vrais est essentielle à la cryptographie moderne, générant les clés permettant de communiquer de manière sécurisée.

### ÉTAT DE LA TECHNIQUE

Pour obtenir une séquence de nombres aléatoires vrais, il est connu de se baser sur un processus physique intrinsèquement aléatoire. L'amplitude des signaux associés pouvant être faibles, il peut être nécessaire de les amplifier avant de les convertir en suite de nombres aléatoires vrais. Cette quête de sources d'aléa amplifié amenant à une séquence numérique aléatoire est une thématique en constante progression.

La génération physique de nombres aléatoires vrais se base sur de tels processus physiques intrinsèquement aléatoires. Il est en particulier connu d'exploiter différents phénomènes physiques, dont :
- le bruit thermique [S. K. Mathew et al., "2.4 Gbps, 7 mW All-Digital PVT-Variation Tolerant True Random Number Generator for 45 nm CMOS High-Performance Microprocessors," in IEEE Journal of Solid-State Circuits, vol. 47, no. 11, pp. 2807-2821, Nov. 2012], ou
- la variation de la fréquence d'une horloge [Fischer V. et al. (2003) True Random Number Generator Embedded in Reconfigurable Hardware. In: Kaliski B.S., Koç .K., Paar C. (eds) Cryptographic Hardware and Embedded Systems - CHES 2002. Lecture Notes in Computer Science, vol 2523. Springer, Berlin, Heidelberg].

Ces phénomènes peuvent être observés directement sur des composants résonants, ou résonateurs, d'un circuit électrique, mais peuvent aussi être observés directement sur des résonateurs équipant des dispositifs appartenant à d'autres domaines.

Par exemple, il a été démontré que l'on peut exploiter le comportement chaotique de composants optiques notamment en utilisant comme résonateurs des lasers et des photo-détecteurs [Uchida, A., Amano, K., Inoue, M., Hirano, K., Naito, S., Someya, H., ... & Yoshimura, K. (2008). Fast physical random bit generation with chaotic semiconductor lasers. Nature Photonics, 2(12), 728].

Les Systèmes Micro/Nano-Électro-Mécaniques (M/NEMS) sont un autre exemple de dispositifs résonants. Certains de leurs composants résonants exploitent des propriétés mécaniques, permettant de convertir directement un déplacement mécanique en un signal électrique. Ces composants sont omniprésents dans les technologies modernes, et sont notamment exploités comme capteurs sous la forme d'accéléromètres, de gyromètres ou encore de magnétomètres [Tanaka, M. (2007). An industrial and applied review of new MEMS devices features, Microelectronic engineering, 84(5-8), 1341-1344]. Parmi les différentes propriétés intrinsèques de ces résonateurs, certaines sont sources d'aléa dont :
- le bruit thermomécanique [T. B. Gabrielson et al. "Mechanical-thermal noise in micromachined acoustic and vibration sensors", in IEEE Transactions on Electron Devices, vol. 40, no. 5, pp. 903-909, May 1993, doi: 10.1109/16.210197], et
- le bruit en 1/f de leur fréquence de résonance [M. Sansa et al. Frequency fluctuations in silicon nanoresonators, Nat. Nanotechnol. 11, 552-558 (2016)].

Grâce à leur non-linéarité intrinsèque, il est possible de mettre ces résonateurs dans un régime chaotique [Y. C. Wang et al. "Chaos in MEMS, parameter estimation and its potential application," in IEEE Transactions on Circuits and Systems I: Fundamental Theory and Applications, vol. 45, no. 10, pp. 1013-1020, Oct. 1998].

Comme mentionné plus haut, afin de créer un générateur physique de nombres aléatoires vrais, il convient d'amplifier le bruit intrinsèque du résonateur exploité. Dans le domaine des circuits électroniques, il est possible d'amplifier le bruit, en tant que source d'aléa, notamment en exploitant la sensibilité du régime chaotique aux conditions dans lesquelles le résonateur se trouve initialement [M. E. Yalcin et al. "True random bit generation from a double-scroll attractor," in IEEE Transactions on Circuits and Systems I: Regular Papers, vol. 51, no. 7, pp. 1395-1404, July 2004].

Par ailleurs, il existe des dispositifs oscillants. De tels dispositifs sont par exemple décrits dans l'article de Ghosh Dia et al., intitulé « Generation & control of chaos in a single loop optoelectronic oscillator » et publié dans la revue Optik. Ces dispositifs ne sont pas comparables aux dispositifs résonants introduits plus haut. En effet, un dispositif oscillant comprend généralement une boucle fermée, répondant à des contraintes bien définies ; sa physique même est fondamentalement différente de celle d'un dispositif résonant. En particulier, un oscillateur « s'affecte lui-même » en ce sens où son circuit est bouclé, alors qu'un dispositif résonant ou résonateur n'a pas de boucle de rétroaction.

La dissertation auprès de l'Université de l'État d'Arizona par Qingfei Chen intitulée "Nonlinear dynamics, control and shock mitigation in microelectromechanical and nanoelectromechanical resonant devices" expose de l'arrière-plan technologique au sujet des dispositifs miniaturisés résonants.

Un objet de la présente invention est de pallier au moins un inconvénient des générateurs physiques de nombres aléatoires vrais connus.

Plus particulièrement, un objet de la présente invention est de fournir un générateur physique chaotique de nombres aléatoires vrais permettant un gain en simplicité d'implémentation, en encombrement et/ou en coût de fabrication, relativement aux générateurs physiques chaotiques de nombres aléatoires vrais existants.

Un autre objet de la présente invention est de fournir un générateur physique de nombres aléatoires vrais compatible avec de nombreuses technologies existantes, et notamment les technologies CMOS (pour « Complementary Metal Oxide Semiconductor » selon la terminologie anglo-saxonne), de préférence sans encombrement ou coût de fabrication supplémentaire.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, selon un premier aspect de l'invention, on prévoit un système d'excitation pour un composant physique résonant, le système comprenant un dispositif d'excitation configuré pour :
- Exciter le composant physique résonant avec un signal d'excitation déterminé pour amener, voire pour maintenir au moins temporairement, le composant physique résonant dans un régime de multi-stabilité dynamique, et
- Moduler le signal d'excitation,
de sorte que le composant physique résonant ait un comportement chaotique et qu'un signal analogique issu du composant physique résonant soit directement ou indirectement représentatif du comportement chaotique du composant physique résonant.

Le système d'excitation est en outre exempt d'une boucle de rétroaction.

Notons que la modulation du signal d'excitation peut comprendre une modulation en phase et/ou en fréquence et/ou en amplitude, par un signal modulant.

Selon un deuxième aspect de l'invention, on prévoit un générateur physique chaotique de nombres aléatoires vrais comprenant :
- Un composant physique résonant,
- Un convertisseur analogique/numérique configuré pour convertir un signal analogique issu du composant physique résonant en un signal numérique représentatif du signal analogique,
- Un dispositif de traitement numérique configuré pour générer une séquence de nombres aléatoires vrais à partir dudit signal numérique,

Le générateur comprend en outre un dispositif d'excitation du composant physique résonant configuré pour :
- Exciter le composant physique résonant avec un signal d'excitation déterminé pour amener, voire pour maintenir au moins temporairement, le composant physique résonant dans un régime de multi-stabilité dynamique, et
- moduler le signal d'excitation.

Le dispositif d'excitation est exempt d'une boucle de rétroaction.

Ainsi, le composant physique résonant présente un comportement chaotique et le signal analogique à convertir est directement ou indirectement représentatif du comportement chaotique du composant physique résonant.

En plaçant le composant physique résonant dans un régime de multi-stabilité dynamique par l'application d'un signal d'excitation, et en modulant de surcroît le signal d'excitation, le comportement du composant physique résonant peut devenir chaotique. Les sources de bruit intrinsèque au composant physique résonant sont alors amplifiées, par exemple exponentiellement, et l'on obtient un bruit de forte amplitude. Le signal analogique issu du composant physique résonant est alors représentatif du comportement chaotique du composant physique résonant. Il est dès lors possible de l'utiliser pour générer une séquence de nombres aléatoires vrais. Considérant que, sauf exception, tout microsystème électromécanique comprend un composant physique propre à jouer un rôle de résonateur pour le générateur selon le deuxième aspect de l'invention, l'on comprend que le système d'excitation selon le premier aspect de l'invention permet un gain en simplicité d'implémentation, en encombrement et/ou en coût de fabrication pour la réalisation de générateurs physiques chaotiques de nombres aléatoires vrais, notamment par rapport aux générateurs basés sur des dispositifs oscillants (avec boucle de rétroaction). L'on comprend en outre que le système d'excitation selon le premier aspect de l'invention est compatible avec de nombreuses technologies existantes, et notamment les technologies CMOS, potentiellement avec un faible encombrement ou un surcoût limité de fabrication.

Selon un troisième aspect de l'invention, on prévoit un procédé de génération de nombres aléatoires vrais, notamment mettant en œuvre un générateur physique chaotique tel que présentement introduit, comprenant les étapes suivantes :
- Excitation d'un composant physique résonant avec un signal d'excitation déterminé pour amener, voire pour maintenir au moins temporairement, le composant physique résonant dans un régime de multi-stabilité dynamique,
- Modulation du signal d'excitation, de sorte que le composant physique résonant ait un comportement chaotique,
Les étapes d'excitation et de modulation étant mises en œuvre par un dispositif d'excitation exempt d'une boucle de rétroaction,
- Acquisition d'un signal analogique, et plus particulièrement électrique, issu du composant physique résonant et directement ou indirectement représentatif du comportement chaotique du composant physique résonant,
- Conversion du signal analogique en un signal numérique représentatif du signal analogique acquis, puis
- Génération à partir dudit signal numérique d'une séquence de nombres aléatoires vrais.

Selon un quatrième aspect de l'invention, on prévoit un produit programme d'ordinateur comprenant des instructions, qui lorsqu'elles sont effectuées par au moins un processeur, exécute au moins les étapes du procédé de génération de nombres aléatoires vrais tel que présentement introduit.

Selon un cinquième aspect de l'invention, on prévoit un microsystème électromécanique comprenant un composant physique résonant, un convertisseur analogique/numérique et un dispositif de traitement numérique, comprenant en outre un dispositif d'excitation configuré pour exciter le composant physique résonant de sorte à former un générateur physique chaotique de nombres aléatoires vrais tel que présentement introduit.

De manière facultative, le système d'excitation selon le premier aspect de l'invention peut en outre présenter au moins l'une quelconque des caractéristiques suivantes :
Par exemple, le système d'excitation est destiné à être intégré dans un microsystème électromécanique comprenant un composant physique résonant pour son utilisation à la génération d'une séquence de nombres aléatoires vrais à partir dudit signal analogique ;

Par exemple, le système d'excitation comprend en outre :
- Un convertisseur analogique/numérique configuré pour convertir le signal analogique issu du composant physique résonant en un signal numérique représentatif du signal analogique,
- Un dispositif de traitement numérique configuré pour générer une séquence de nombres aléatoires vrais à partir dudit signal numérique ;

Par exemple, le système d'excitation comprend en outre :
- un dispositif de démodulation configuré pour mettre en œuvre l'une ou l'autre des étapes suivantes :
   i. avant la conversion du signal analogique, une démodulation du signal analogique à la fréquence f du signal d'excitation, et
   ii. après la conversion du signal analogique, une démodulation du signal numérique à la fréquence f du signal d'excitation ;

De manière facultative, le générateur physique chaotique selon le deuxième aspect de l'invention peut en outre présenter au moins l'une quelconque des caractéristiques suivantes :
Par exemple, le signal analogique à convertir est représentatif des changements d'amplitude et/ou de phase de vibration du composant physique résonant excité par le signal d'excitation modulé ;
Le générateur est de préférence exempt de tout type de dispositifs d'excitation configurés pour faire flamber le composant physique résonant ;
Par exemple, ledit régime de multi-stabilité dynamique est un régime de bi-stabilité dynamique non-linéaire dit de Duffing ;
Par exemple, ledit signal d'excitation présente une tension de crête comprise entre 0,01 et 10V, de préférence comprise entre 0,1 et 5V, et une fréquence f égale à la fréquence de résonance f₀ du composant physique résonant à plus ou moins 20% près, de préférence à plus ou moins 10% près ;
Par exemple, ledit signal d'excitation modulé présente une fréquence de modulation δf de préférence supérieure, mais potentiellement sensiblement égale, au rapport f₀/Q de la fréquence de résonance f₀ du composant physique résonant par son facteur de qualité Q ;
Par exemple, le composant physique résonant comprend un micro/nano-résonateur, tel qu'une micro/nano-poutre doublement encastrée ;
Par exemple, le générateur comprend en outre un dispositif de démodulation configuré pour mettre en œuvre l'une ou l'autre des étapes suivantes :
   - avant la conversion du signal analogique, une démodulation du signal analogique à la fréquence f du signal d'excitation, et
   - après la conversion du signal analogique, une démodulation du signal numérique à la fréquence f du signal d'excitation.

De manière facultative, le procédé de génération selon le troisième aspect de l'invention peut en outre présenter au moins l'une quelconque des caractéristiques suivantes :
Par exemple, le procédé peut comprendre en outre, après l'étape d'acquisition du signal analogique et avant l'étape de conversion du signal analogique, une étape d'amplification du signal analogique acquis ;
Par exemple, le signal d'excitation est paramétré pour amener, voire pour maintenir au moins temporairement, le composant physique résonant dans un régime de bi-stabilité dynamique non-linéaire dit de Duffing ;
Par exemple, le régime de multi-stabilité dynamique du composant physique résonant étant associé à un domaine de fréquence continu et limité, la fréquence f du signal d'excitation est déterminée pour amener le composant physique résonant dans un sous-régime du régime de multi-stabilité dynamique, ledit sous-régime étant associé à une première moitié, voire à un premier tiers, du domaine de fréquence associé au régime de multi-stabilité dynamique du composant physique résonant ;
Par exemple, l'excitation du composant physique résonant comprend l'application à ses bornes, en tant que signal d'excitation, d'une tension de crête comprise entre 0,01 et 10V, et de préférence comprise entre 0,1 et 5V, et d'une fréquence f égale à la fréquence de résonance f₀ du composant physique résonant à plus ou moins 20% près, de préférence à plus ou moins 10% près ;
Par exemple, le potentiel du composant physique résonant dans son régime de multi-stabilité dynamique présentant deux puits distincts :
   - La modulation en fréquence du signal d'excitation est d'une amplitude δf déterminée pour induire des changements d'état du composant physique résonant dans son régime de multi-stabilité dynamique depuis l'un des deux puits de potentiel vers l'autre, et inversement, et/ou
   - La modulation en amplitude du signal d'excitation est d'une amplitude δf déterminée pour induire des changements d'état du composant physique résonant depuis son régime monostable vers son régime de multi-stabilité dynamique, et inversement ;
Par exemple, le signal d'excitation est modulé avec une fréquence de modulation δf de préférence supérieure, mais potentiellement sensiblement égale, au rapport f₀/Q de la fréquence de résonance f₀ du composant physique résonant par son facteur de qualité Q ;
Par exemple, le procédé comprend en outre l'une ou l'autre des étapes suivantes :
   - avant la conversion du signal analogique, une démodulation du signal analogique à la fréquence f du signal d'excitation, et
   - après la conversion du signal analogique, une démodulation du signal numérique à la fréquence f du signal d'excitation ;
Par exemple, le signal analogique étant un premier signal analogique directement représentatif des changements d'amplitude et/ou de phase de vibration du composant physique résonant, la démodulation du signal analogique avant la conversion du signal analogique comprend une comparaison du premier signal analogique avec le signal d'excitation pour déduire, en tant que signal analogique indirectement représentatif des changements d'amplitude et/ou de phase de vibration du composant physique résonant, un second signal analogique représentatif d'un changement d'amplitude du premier signal analogique et/ou d'un changement de phase entre le premier signal analogique et le signal d'excitation ;
Par exemple, la conversion du signal analogique comprend l'échantillonnage du signal analogique à une fréquence d'échantillonnage ou par paliers choisis en fonction de la tension du signal d'excitation et d'une fréquence de modulation δf avec laquelle le signal d'excitation est modulé. La fréquence d'échantillonnage est de préférence au moins 10 fois plus élevée que la fréquence de modulation δf ;
Par exemple, un signal analogique représentatif des changements d'amplitude de vibration du composant physique résonant et un signal analogique représentatif des changements de phase du composant physique résonant étant acquis lors de l'étape d'acquisition, l'étape de conversion comprend la conversion de chacun de ces deux signaux analogiques en un signal numérique ;
Par exemple, le signal analogique étant converti en une succession de valeurs chacune codée sur un nombre N de bits, par exemple strictement supérieur à trois, typiquement égal à huit, la génération de la séquence binaire de nombres aléatoires vrais comprend la génération d'une série de bits pouvant être illustrée sous la forme d'un signal carré, puis la découpe de cette série en une séquence de blocs de bits sur la base de chacun desquels un nombre aléatoire vrai de la séquence est généré ;
Par exemple, ladite série de bits est générée en fonction des seuls n-bits de poids faible de chaque valeur codée de la succession ;
Par exemple, la génération de la séquence binaire de nombres aléatoires comprend la génération d'une série de bits pouvant être illustrée sous la forme d'un signal carré pour chacun des deux signaux analogiques acquis, puis une opération logique, par exemple par l'opérateur « Ou exclusif », entre les deux séries de bits générées, pour obtenir la série de blocs de bits à découper.

On entend par un paramètre « sensiblement égal à » une valeur donnée que ce paramètre est égal à la valeur donnée, à plus ou moins 10 %, voire 5 %, près de cette valeur.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma électronique d'un mode de réalisation des deuxième et cinquième aspects de l'invention et comprenant un schéma électronique d'un mode de réalisation du premier aspect de l'invention.
La figure 2 représente graphiquement le passage d'un régime monostable (courbe du bas) à un régime de bi-stabilité dynamique dit de Duffing (courbes du haut).
Les figures 3A et 3B représentent : A) le régime de bi-stabilité dynamique dit de Duffing par un graphique de l'amplitude de vibration du composant physique résonant en fonction de la fréquence d'excitation qui lui est appliquée et B) le potentiel à deux puits du composant physique résonant en fonction de son amplitude de vibration. Dans les deux figures, la flèche représente un guide schématique décrivant le passage d'une amplitude forte à une amplitude faible au sein de l'hystérésis.
La figure 4 illustre graphiquement des comportements possibles du composant physique résonant lorsque ce dernier est excité par le signal d'excitation modulé.
La figure 5 illustre graphiquement un mode de réalisation de l'étape de conversion de chacun de deux signaux analogiques représentatifs de l'amplitude et de la phase du composant physique résonant considéré, en un signal numérique à partir duquel une séquence de nombres aléatoires vrais est à générer.
La figure 6 est un ordinogramme d'un mode de réalisation du procédé de génération selon le troisième aspect de l'invention.

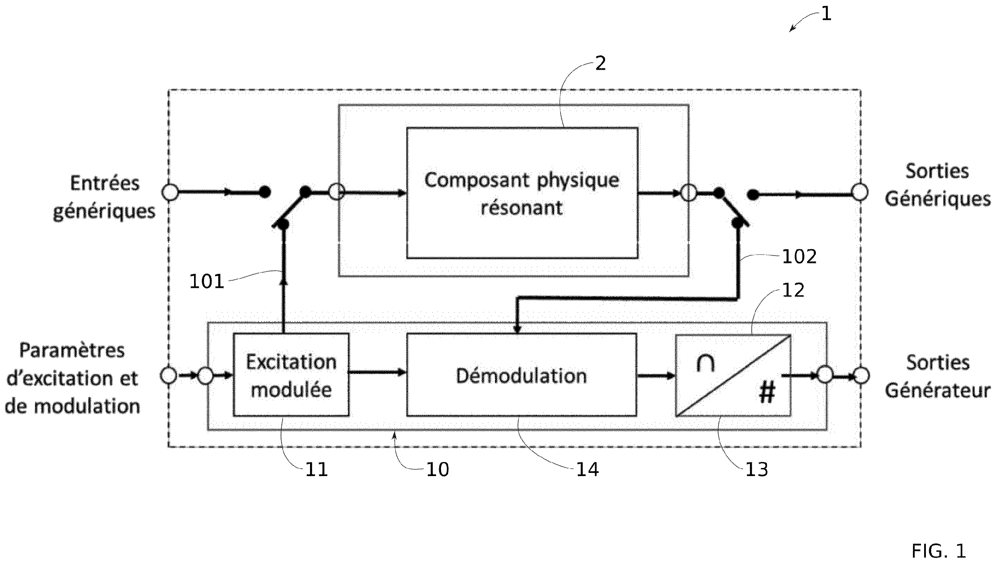

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les figures 1, 4 et 5 ne sont pas nécessairement représentatives de la réalité.

### DESCRIPTION DÉTAILLÉE

La génération de nombres aléatoires vrais est essentielle à la cryptographie moderne. Elle permet en particulier de générer les clés sécurisant les communications. Pour obtenir une séquence de nombres aléatoires vrais, la présente invention propose de se baser sur un processus physique intrinsèquement aléatoire. Différents aspects de l'invention sont décrits ci-dessous, en référence aux figures annexées, qui comprennent un système d'excitation 10 d'un composant physique résonant 2, un générateur physique chaotique 1 de nombres aléatoires vrais pouvant constituer au moins une partie d'un microsystème électromécanique, et un procédé de génération 100 de nombres aléatoires vrais associé au générateur 1.

Par la suite, nous utiliserons parfois le terme « résonateur » pour faire référence au composant physique résonnant 2 susmentionné.

L'invention propose plus particulièrement d'exploiter la capacité que présente la plupart des composants physiques résonants a montré un comportement chaotique lorsqu'ils sont excités de façon ad hoc. De tels composants physiques résonants sont déjà présents dans de nombreuses technologies ; et l'invention présente comme premier avantage technique de montrer comment il est possible d'utiliser la capacité susmentionnée des résonateurs, déjà mis en œuvre dans de nombreux appareils notamment électroniques, pour générer des nombres aléatoires vrais en détournant ces composants de leurs usages premiers. Ainsi, l'homme du métier appréciera à la lecture de ce qui suit que l'invention selon certains de ses aspects, prévoit la possibilité d'ajouter, à un appareil notamment électronique existant qui comprend un résonateur 2, quelques composants embarqués, et notamment un dispositif d'excitation 11 du résonateur 2, pour détourner ce dernier de son usage premier, afin de l'utiliser à la génération 150 d'une séquence de nombres aléatoires vrais. La solution proposée permet donc de conférer à la plupart des appareils, notamment électroniques, existants une fonction supplémentaire directement utilisable par ces mêmes appareils, et/ou par d'autres qui leur seraient connectés, afin notamment de permettre à ces appareils de communiquer de façon sécurisée. L'homme du métier notera, à la lecture de ce qui suit, que cette fonctionnalisation additionnelle est en outre rendue possible sans induire :
- des problèmes d'encombrement significatifs, notamment pour des appareils qui se veulent de plus en plus miniaturisés, et/ou
- un coût de fabrication supplémentaire significatif.

Il est en outre tout à fait possible que les appareils, notamment électroniques, déjà fabriqués puissent être modifiés à moindre coût de sorte à y embarquer le ou les dispositifs permettant de lui conférer la fonction additionnelle de générateur 1 de nombres aléatoires vrais. La figure 1 peut être vue comme illustrant un schéma électronique comprenant un système d'excitation 10 ajouté aux bornes d'un résonateur 2 équipant un microsystème électromécanique existant. Des moyens de commutation, ici représenté sous la forme d'interrupteurs, peuvent alors être prévus qui sont configurées pour relier fonctionnellement le système d'excitation 10 aux bornes du résonateur 2, et pour déconnecter les bornes du résonateur 2 de ces entrées et sorties génériques. Le système d'excitation 10 tel qu'illustré sur la figure 1 comprend le dispositif d'excitation 11, dont les données d'entrée comprennent les paramètres d'excitation du résonateur 2 et de modulation de cette excitation, un dispositif de démodulation 14, un convertisseur analogique/numérique 12 et un dispositif de traitement numérique 13, tels que décrits plus bas. Cependant, comme cela ressortira clairement de la description qui suit, le système d'excitation 10 comprend uniquement dans sa version la plus générique le dispositif d'excitation 11, les autres composants du système d'excitation 10 tel qu'illustré sur la figure 1 pouvant appartenir à un microsystème électromécanique 1 existant.

On notera que, parmi les technologies existantes compatibles avec la mise en œuvre de l'invention, les technologies CMOS sont en particulier directement compatibles avec cette mise en œuvre.

Les micro/nano-systèmes électromécaniques peuvent être définis comme des dispositifs de taille micro/nanométrique permettant de convertir un processus mécanique dans le domaine électrique, et inversement. Les micro/nano-systèmes électromécaniques comprenant au moins un composant physique résonant 2 ont la particularité de disposer, à travers leur(s) composant(s) physique(s) résonnant(s), d'une masse vibrante permettant de transférer de l'énergie mécanique en énergie électrique, ou inversement, pour obtenir par exemple un récupérateur d'énergie ou un capteur de force, selon la géométrie choisie.

Les micro/nano-systèmes électromécaniques résonants sont principalement caractérisées par leur fréquence de résonance f₀ et leur facteur de qualité Q.

Une des géométries utilisables dans le cadre de la présente invention consiste par exemple en une micro/nano-poutre doublement encastrée. La position à l'équilibre de la poutre, en tant que résonateur 2, peut en effet alterner entre différents états remarquables, notamment lorsque la poutre est amenée dans un régime de multi-stabilité dynamique. Atteindre un tel régime est possible en appliquant une force alternative suffisamment élevée sur la poutre. L'application d'une telle force peut dans tous les cas de figure être considérée comme consistant en l'application d'un signal d'excitation du résonateur 2. C'est le premier rôle que peut jouer, selon la présente invention, le dispositif d'excitation 11. Selon l'exemple considéré, la position de la poutre soumise à un tel signal d'excitation peut alors résonner entre des états proches desdits états remarquables et/ou autour de ces états remarquables.

Le signal d'excitation peut consister, selon la nature du résonateur 2, en une tension alternative appliquée à ses bornes. Auquel cas, le signal d'excitation peut être caractérisé en fonction de paramètres de ladite tension alternative tels que sa tension de crête, appelée aussi par la suite « tension d'excitation », et sa fréquence f, appelée aussi par la suite « fréquence d'excitation ». Par exemple, le signal d'excitation présente une tension de crête comprise entre 0,01 et 10V, de préférence comprise entre 0,1 et 5V, et une fréquence f égale à la fréquence de résonance f₀ du résonateur 2 à plus ou moins 20% près, de préférence à plus ou moins 10% près. Il est à noter que le signal d'excitation n'est pas limité à un signal électrique, mais s'étend par exemple également à un signal mécanique auquel serait sensible le résonateur 2 de par sa nature.

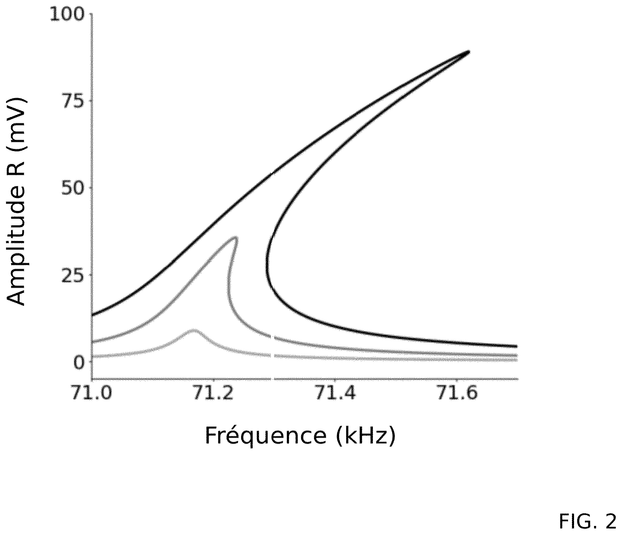

Plus généralement, tout composant physique résonnant 2 peut être excité 110 avec un signal d'excitation déterminée pour amener, voire pour maintenir au moins temporairement, le composant physique résonnant 2 dans un régime de multi-stabilité dynamique. En référence à la figure 2, montrant un graphique comprenant plusieurs courbes issues de simulations numériques, on observe que la réponse en termes d'amplitude R(mV) de variation d'un résonateur 2 en fonction de la fréquence d'un signal d'excitation faible (courbe inférieure) se présente sous la forme d'une Lorentzienne illustrant le comportement linéaire du résonateur 2 lorsqu'il est soumis à une force d'excitation faible. En augmentant la force d'excitation appliquée au résonateur 2, sa réponse se transforme progressivement et devient asymétrique (Cf. courbes supérieures) ; la réponse du résonateur 2 devient non linéaire, ce qui a pour effet de modifier sa fréquence de résonance f₀. On observe alors une hystérésis en fréquence qui, dans le cas illustré, et représentatif d'un régime de bi-stabilité dynamique, et plus particulièrement ici d'un régime de bi-stabilité dynamique non-linéaire dit de Duffing.

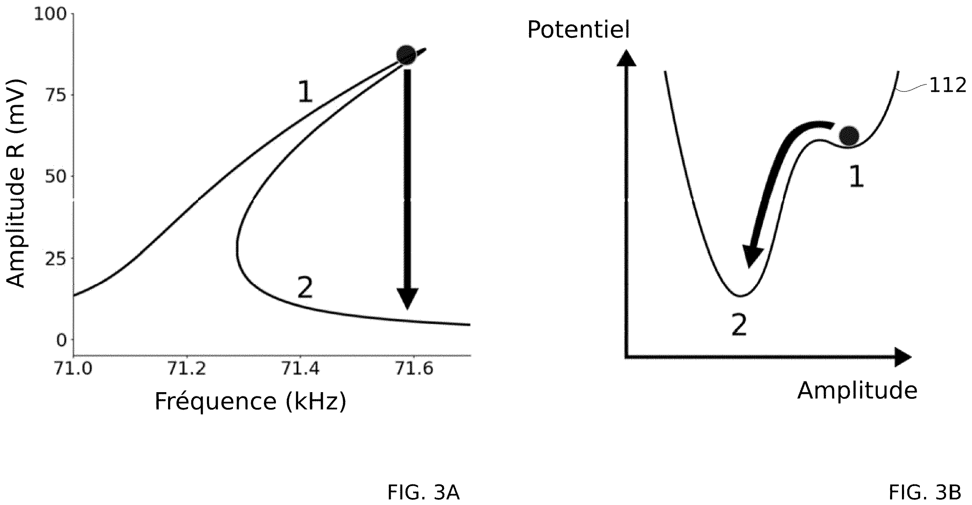

La courbe supérieure illustrée sur le graphique de la figure 2 est reproduite sur le graphique de la figure 3A. Sur cette dernière, des références « 1 » et « 2 » ont été ajoutées qui pointent grossièrement vers des états remarquables distincts entre eux dans lesquels le résonateur 2 peut sensiblement se trouver pour une fréquence d'excitation donnée. Les références « 1 » et « 2 » sont reproduites de façon correspondante sur la figure 3B qui montre, pour ladite fréquence d'excitation donnée, l'évolution du potentiel du résonateur 2 en fonction de l'amplitude R(mV) de ses variations. Ainsi, la courbe illustrée sur le graphique de la figure 3B montre que chacun des états remarquables référencés « 1 » et « 2 » correspond à un état de moindre potentiel, c'est-à-dire à un puits de potentiel. Les états remarquables susmentionnés correspondent donc à des états stables préférentiels autour de chacun desquels le résonateur 2 aura une probabilité plus grande de se trouver pour ladite fréquence d'excitation donnée. Les graphiques des figures 3A et 3B illustrent ainsi une bifurcation entre les deux états stables de l'hystérésis. Ainsi, à de fortes amplitudes du signal d'excitation, une hystérésis s'ouvre dans le domaine fréquentiel, favorisant l'état de forte amplitude de variation « 1 » ou l'état de faible amplitude de variation « 2 ». Ces deux états sont directement comparables avec le cas d'un résonateur flambé, à la différence que les états de ce dernier sont statiques (par exemple, ils correspondent aux positions haute et basse d'une poutre flambée), alors que les deux états du résonateur 2 amené selon l'invention dans un régime de multi-stabilité dynamique sont dynamiques (ils correspondent à des amplitudes de vibration grande ou faible du résonateur 2). De même qu'avec le cas d'un résonateur flambé, il est possible d'imposer, au résonateur 2 amené selon l'invention dans un régime de multi-stabilité dynamique, un comportement chaotique en modulant la force d'excitation qui lui est appliquée.

Notons ici que le signal d'excitation selon l'invention ne vise aucunement à faire flamber le résonateur 2. De préférence, le système d'excitation 10 selon le premier aspect de l'invention et/ou le générateur physique chaotique 1 selon le deuxième aspect de l'invention sont exempts de tout type de dispositif d'excitation configuré pour faire flamber le résonateur 2. Ainsi, la mise en œuvre de l'invention n'est pas conditionnée à la réalisation d'une structure flambée, une telle réalisation étant complexe en termes de fabrication et nécessitant généralement une forte consommation d'énergie pour fonctionner. Au contraire, la mise en œuvre de l'invention bénéficie du fait que presque tout micro/nano-résonateur 2 présente un comportement non-linéaire à de fortes amplitudes d'excitation, sans conditions particulières sur sa géométrie, le matériau utilisé, ou sur les techniques de transduction qu'il met en œuvre. En particulier, la mise en œuvre de l'invention peut être réalisée sur la plupart des micro/nano-résonateurs 2 tels qu'ils existent, et donc sans nécessité d'une altération de leur processus de fabrication.

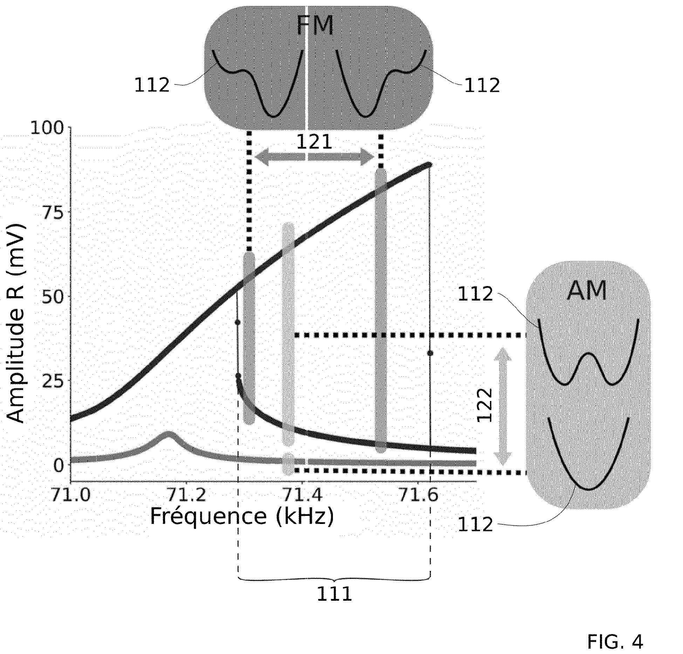

Si le signal d'excitation est en outre modulé 120, en fréquence 121 et/ou en amplitude 122, comme illustré sur la figure 4, le résonateur 2 peut adopter une dynamique complexe, non périodique, chaotique. Le comportement chaotique ainsi généré se caractérise notamment par sa non-reproductibilité et l'impossibilité de prédire l'état du résonateur 2 à moyen et long termes. En effet, bien que tout régime chaotique soit déterministe, c'est-à-dire bien que la réponse du résonateur 2 peut être prédite si les équations gouvernant son comportement sont parfaitement connues, une très faible variation des conditions initiales, par exemple de température ou de pression ambiante, dans lesquels le résonateur 2 se trouve, entraîne rapidement des changements de comportement conséquents, à l'instar de l'effet papillon. Ainsi, le comportement de tout résonateur 2 étant toujours affecté par la présence d'un bruit, aussi faible soit-il, un changement drastique de sa réponse à un signal d'excitation modulé 101 tel que susmentionné peut être observé, notamment à chaque nouvelle application d'un même signal d'excitation modulé 101, rendant impossible la prédiction de son comportement dynamique à moyen et long termes. C'est pourquoi un micro/nano-système électromécanique 1 dont au moins un résonateur 2 est amené dans un régime de multi-stabilité dynamique et est en outre perturbé de sorte que le résonateur adopte un comportement chaotique permet de générer, en sortie du résonateur 2, un signal analogique 102 aléatoire et de forte amplitude. Notons ici que le changement de comportement susmentionné du résonateur 2 peut être observé sur la seule phase du signal analogique, sur la seule amplitude du signal analogique 102, sur chacune parmi la phase et l'amplitude du signal analogique 102, ou sur toutes combinaisons de ces deux paramètres du signal analogique 102 ; c'est différentes possibilités sont embrassées par l'expression « changements d'amplitude et/ou de phase de vibration du résonateur 2 » employée ci-dessous.

Notons ici que l'apparition du comportement chaotique du résonateur 2 peut, comme déjà implicitement introduit ci-dessus, nécessiter un certain temps à compter du début de l'application du signal d'excitation modulé 101. Plus particulièrement, ce temps peut être nécessaire à l'observation du changement de la réponse du résonateur 2 au signal d'excitation modulé 101 en fonction des conditions initiales qu'il expérimente. L'homme du métier saura apprécier ce temps a priori ou de façon heuristique, par exemple en vérifiant l'aléa de la séquence de nombres générés 150, notamment en mettant en œuvre les tests de référence connus sous la référence NIST 800-22 ou AIS 31. Le maintien au moins temporaire du résonateur 2 dans le régime de multi-stabilité dynamique peut être considéré notamment à l'aune de ce temps nécessaire à l'expression du comportement chaotique du résonateur 2 par le signal analogique 102 qui en est issu.

Quel que soit l'application initiale du résonateur 2, par exemple une application en tant qu'accéléromètre ou récupérateur d'énergie, ce dernier peut, selon l'invention, être aussi utilisé pour générer un signal analogique 102 directement ou indirectement représentatif du comportement chaotique du résonateur 2 amené dans un régime de multi-stabilité dynamique, lui conférant ainsi une deuxième fonction sans coût supplémentaire de fabrication, sans encombrement supplémentaire significatif et/ou pour une consommation énergétique relativement faible.

Comme illustré sur la figure 4, le signal d'excitation peut être modulé 120 de nombreuses façons dont les classiques modulations en fréquence 121 et/ou en amplitude 122. Plus particulièrement, la modulation 120 en fréquence 121 du signal d'excitation peut être effectuée à une fréquence de modulation δf déterminée pour induire des changements d'état du résonateur 2 dans son régime de multi-stabilité dynamique depuis l'un des deux puits de potentiel vers l'autre, et inversement, comme illustré par les courbes de potentiel 112 surmontées sur la figure 4 des initiales FM pour « modulation en fréquence ». En alternative ou en complément, la modulation 120 en amplitude 122 du signal d'excitation peut être effectuée à une fréquence de modulation δf déterminée pour induire des changements d'état du résonateur 2 depuis son régime monostable vers son régime de multi-stabilité dynamique, et inversement, comme illustré par les courbes de potentiel 112 surmontées sur la figure 4 des initiales AM pour « modulation en amplitude ». Notons ici que le maintien au moins temporaire du résonateur 2 dans le régime de multi-stabilité dynamique peut être considéré notamment à l'aune de cette possibilité qu'a le résonateur à visiter son régime monostable, notamment lorsque la modulation 120 comprend une modulation en amplitude 122.

Pour exprimer ce qui précède de façon alternative et/ou complémentaire, il est possible de considérer que le dispositif d'excitation 11 du résonateur 2 est configuré pour:
- moduler 120 en fréquence 121 le signal d'excitation avec une fréquence de modulation δf déterminée pour amener alternativement le composant physique résonant d'un état à un autre parmi deux états proches des deux états de moindre potentiel du résonateur 2 lorsqu'il est dans ledit régime de bi-stabilité dynamique, et/ou
- moduler 120 en amplitude 122 le signal d'excitation avec une fréquence de modulation δf déterminée pour amener alternativement le résonateur 2 d'un état proche de son état monostable à l'un ou l'autre parmi deux états proches des deux états de moindre potentiel du résonateur 2 lorsqu'il est dans ledit régime de bi-stabilité dynamique.

De préférence, ces passages du résonateur 2 entre les différents états susmentionnés sont suffisamment rapides pour que le résonateur 2 ne reste pas un temps significatif dans un état proche d'un même état de moindre potentiel. Ledit temps significatif dépend du signal d'excitation, par exemple de sa tension et/ou de sa fréquence. L'on s'assure de passages suffisamment rapides du résonateur 2 entre les différents états susmentionnés en appliquant au résonateur 2 un signal d'excitation modulé 101 présentant une fréquence de modulation δf de préférence supérieure, mais potentiellement sensiblement égale, au rapport f₀/Q de la fréquence de résonance f₀ du résonateur 2 par son facteur de qualité Q. La paramétrisation dudit temps significatif peut également être à adapter en fonction des paramètres d'échantillonnage du signal analogique 102. On peut citer, parmi les paramètres d'échantillonnage, la fréquence d'échantillonnage ou les paliers d'échantillonnage, selon la méthode d'échantillonnage utilisée de façon connue par l'homme du métier.

On constate, notamment sur la figure 4, que le régime de multi-stabilité dynamique, ou de bi-stabilité dynamique selon l'exemple illustré, du résonateur 2 est associé à un domaine de fréquence 111 continu et limité. Dans cet exemple, notons que la fréquence f du signal d'excitation est de préférence déterminée pour amener le résonateur 2 dans un sous-régime du régime de bi-stabilité dynamique, ce sous-régime étant associé à une première moitié, voire à un premier tiers, du domaine de fréquence associé au régime de bi-stabilité dynamique du résonateur 2.

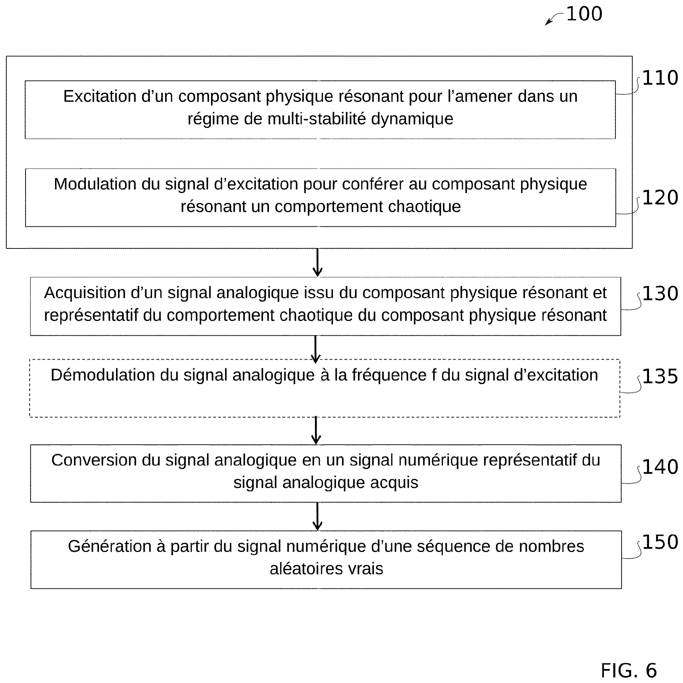

Les étapes 110 et 120 du procédé de génération 100 de nombres aléatoires vrais sont notamment illustrées sur la figure 6. Bien que ces étapes y soient illustrées, et décrites ci-dessus, comme successives, notons qu'elles ne le sont pas nécessairement. Prises en combinaison, elles consistent en l'application d'un signal d'excitation modulé 101 sur le résonateur 2.

C'est cette possible combinaison que symbolise le fait que les étapes 110 et 120 soient représentées sur la figure 6 dans un même encadré.

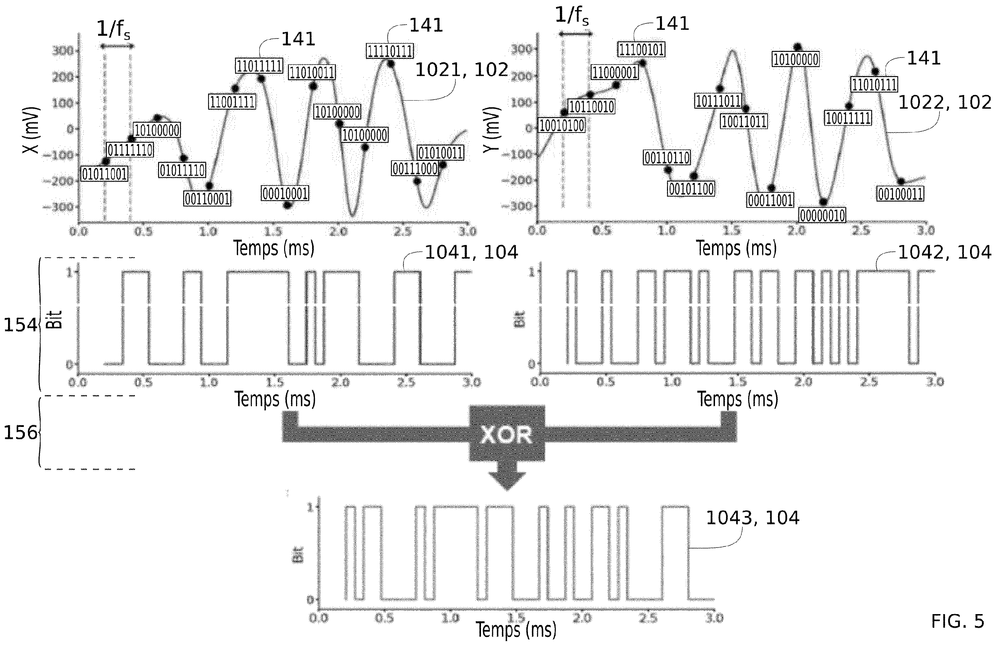

Exploitant ainsi la capacité d'un résonateur 2, tel que la poutre susmentionnée, pour générer, à sa sortie, un signal analogique 102 représentatif des changements d'amplitude et/ou de phase de vibration du résonateur 2, il est dès lors possible de transformer ce signal analogique 102 en une séquence de nombres aléatoires vrais. Les étapes du procédé 100 afférentes à cette transformation sont décrites ci-dessous, notamment en référence aux figures 5 et 6.

Pour transformer le signal analogique 102 issu du résonateur 2 en une séquence de nombres aléatoires vrais, il est prévu d'utiliser un convertisseur analogique/numérique 12 pour convertir 140 le signal analogique 102 en un signal numérique 104. Cette conversion 140 est de préférence réalisée de sorte que le signal numérique 104 soit représentatif des aspects aléatoire et de forte amplitude du signal analogique 102. Pour cela, il suffit à l'homme du métier de choisir de façon ad hoc les paramètres de la conversion 140, et notamment les paramètres de l'échantillonnage du signal analogique 102. L'échantillonnage du signal analogique 102 peut être réalisé selon une fréquence d'échantillonnage fₛ déterminée, ou par paliers d'échantillonnage choisis, notamment en fonction de la tension de crête du signal d'excitation et de la fréquence de modulation δf avec laquelle le signal d'excitation est modulé 120.

Notons que la plupart des micro/nano-systèmes électromécaniques assurent déjà la conversion, dans une version binaire numérique, du signal analogique issu de son résonateur, par un convertisseur analogique/numérique. La conversion 140 selon le procédé de l'invention peut être réalisée :
- par le convertisseur 12 déjà prévu dans le micro/nano-système électromécanique 1 considéré ou
- par un convertisseur 12 spécifique à un système d'excitation 10 selon le premier aspect de l'invention qui serait ajouté à l'architecture d'un micro/nano-système électromécanique 1 que ce dernier existe déjà ou qu'il soit en conception.

Une fois le signal analogique 102 converti 140 en signal numérique 104 également représentatif du comportement chaotique du résonateur 2, il est prévu qu'un dispositif de traitement numérique 13, tel qu'un processeur, soit configuré pour générer 150, à partir de ce signal numérique 104, la séquence de nombres aléatoires vrais.

Notons que la plupart des micro/nano-systèmes électromécaniques comprend déjà un tel dispositif de traitement numérique 13. Ainsi, le traitement numérique 150 selon le procédé 100 de l'invention peut :
- être réalisé par le dispositif de traitement 13 équipant déjà le micro/nano-système électromécanique 1 considéré ou
- être un dispositif de traitement 13 spécifique à un système d'excitation 10 selon le premier aspect de l'invention qui serait ajouté à l'architecture d'un micro/nano-système électromécanique 1 que ce dernier existe déjà ou qu'il soit en conception.

Comme illustré sur la figure 6, le procédé 100 selon le troisième aspect de l'invention peut comprendre en outre une étape consistant à démoduler 135 le signal analogique 102 à la fréquence f du signal d'excitation. Cette étape permet ne plus avoir dans le signal démodulé que l'information liée à l'effet de la modulation 120 du signal d'excitation. Autrement dit, le signal ainsi démodulé ne porte plus que les informations représentatives des changements d'amplitude et/ou de phase de vibration du résonateur 2. L'on comprend que, bien qu'optionnelle, cette étape de démodulation présente un intérêt certain en ce qu'elle permet de simplifier et/ou d'augmenter l'efficacité de l'étape subséquente de génération 150 de la séquence de nombres aléatoires vrais, cette dernière étant en effet réalisée dès lors sur la base des seules informations qui lui sont les plus utiles.

Il est à noter que le dispositif de démodulation 14 permettant de mettre en œuvre l'étape 135 du procédé 100 notamment selon son mode de réalisation illustrée sur la figure 6 peut :
- consister en un dispositif équipant déjà le micro/nano-système électromécanique 1 considéré ou
- être un dispositif spécifique à un système d'excitation 10 selon le premier aspect de l'invention qui serait ajouté à l'architecture d'un micro/nano-système électromécanique 1 que ce dernier existe déjà ou qu'il soit en conception.

Comme mentionné plus haut le signal analogique 102 issu du résonateur 2 excité par le signal d'excitation modulé 101 peut être directement ou indirectement représentatif du comportement chaotique du résonateur 2. Dès lors le signal analogique 102 peut être un premier signal analogique directement représentatif des changements d'amplitude et/ou de phase de vibration du résonateur 2. Dans ce cas, la démodulation 135 du signal analogique 102 telles qu'introduites ci-dessus comprend par exemple une comparaison du premier signal analogique avec le signal d'excitation pour déduire, en tant que signal analogique indirectement représentatif des changements d'amplitude et/ou de phase de vibration du résonateur 2, un second signal analogique représentatif d'un changement d'amplitude du premier signal analogique et/ou d'un changement de phase entre le premier signal analogique et le signal d'excitation.

En référence à la figure 5, un signal analogique 1021 représentatif des changements d'amplitude de vibration du composant physique résonant 2 et un signal analogique 1022 représentatif des changements de phase du résonateur 2 peut découler de l'étape d'acquisition 130 du signal analogique 102 issu du résonateur 2, et notamment de l'étape de démodulation 135 susmentionnée. L'étape de conversion 140 comprend alors la conversion de chacun de ces deux signaux analogiques en un signal numérique 1041, 1042 correspondants.

Plus particulièrement, chaque signal analogique 1021, 1022 étant converti 140 en une succession de valeurs 141 chacune codée sur un nombre N de bits, égal à huit sur l'exemple illustré par la figure 5, la génération 150 de la séquence binaire de nombres aléatoires vrais peut comprendre la génération, pour chaque signal analogique 1021, 1022, d'une série de bits 1041, 1042 pouvant être illustrée sous la forme d'un signal carré.

En référence à la figure 5, chaque série de bits 1041, 1042 peut être générée 154 en fonction des seuls n-bits de poids faible de chaque valeur 141. Sur la figure 5, seuls les 3 bits de poids faible de chaque valeur 141 sont utilisés pour générer les séries de bits 1041 et 1042. Le procédé selon cette dernière caractéristique est particulièrement avantageux quand le comportement chaotique du résonateur 2 n'est pas suffisant pour amplifier le bruit de façon si significative que tous les bits de chaque valeur 141 en seraient représentatifs.

Toujours en référence à la figure 5, deux séries de bits 1041 et 1042 étant obtenues pour les deux signaux analogiques 1021, 1022, la génération 150 de la séquence binaire de nombres aléatoires vrais peut en outre comprendre une opération logique 156, par exemple par l'opérateur « Ou exclusif », entre les deux séries de bits 1041 et 1042, pour obtenir la série de blocs de bits 1043 dont les propriétés aléatoires peuvent être plus avantageuses.

La génération 150 de la séquence binaire de nombres aléatoires vrais peut ensuite comprendre la découpe (non représentée) de cette série de blocs de bits 1043 en une séquence de blocs de bits sur la base de chacun desquels un nombre aléatoire vrai peut être généré 150.

Un microsystème électromécanique comprenant un résonateur 2 prenant la forme d'un disque de diamètre submillimétrique et d'épaisseur sensiblement égale à 10 microns et dont la transduction s'effectue de manière piézo-électrique a été utilisé pour démontrer la faisabilité de la présente invention selon ses différents aspects. Le microsystème électromécanique a été placé sous vide et plus particulièrement à une pression inférieure à 1 millibar. Sa fréquence de résonance f₀ est sensiblement égale à 71,5 kHz et présente un facteur de qualité Q égale à 1100 et un coefficient de non-linéarité α égal à 40 kHz/V². Ce type de résonateur 2 est généralement utilisé comme générateur et détecteur d'ondes acoustiques. La tension de crête V₀ du signal d'excitation appliqué au résonateur 2 se situe entre 0,1 V et 10 V ; on utilise principalement une tension de crête égale à 5 V. La fréquence d'excitation f du signal d'excitation est sensiblement égale à la fréquence de résonance f₀ du résonateur 2. En utilisant un tel signal d'excitation le résonateur 2 considéré ici est amené dans un régime dit de Duffing. L'hystérésis est alors générée sur un domaine de fréquence 111 d'étendue sensiblement égale à α.V₀². Pour conférer au résonateur 2 un comportement chaotique, la fréquence de modulation δf du signal d'excitation est déterminée à la fois par l'étendue du domaine de fréquence 111 et par la bande passante f₀/Q du résonateur 2. La valeur de la fréquence de modulation δf peut, notamment de par sa dépendance à l'étendue du domaine de fréquence 111 et à la bande passante f₀/Q du résonateur 2, varier selon que l'on module 120 la tension de crête V₀, la fréquence d'excitation f et/ou la fréquence de résonance f₀. Les valeurs de la fréquence de modulation δf à utiliser peuvent être déterminées numériquement ou être extrapolées à partir d'un résonateur 2 déjà connu en le normalisant. Le signal analogique 102 ainsi obtenu est démodulé à la fréquence d'excitation f. Sur ce signal démodulé, un échantillonnage est effectué à une fréquence d'échantillonnage dépendant de la fréquence de modulation δf. La fréquence d'échantillonnage est de préférence au moins 10 fois plus élevée que la fréquence de modulation δf. Par exemple, la fréquence de modulation peut varier de 50 Hz à 5 kHz, et la fréquence d'échantillonnage peut varier de 500 échantillons par seconde à 50 000 échantillons par seconde. La conversion 140 a été réalisée avec une précision de 64 bits, ramené à une précision de 8 bits pour simuler un convertisseur analogique/numérique de 8 bits à la sortie du résonateur 2. Chaque valeur du signal numérique 104 est donc codée sur 8 bits, desquels seuls les n bits de poids faible, typiquement les 3 bits de poids faible, ont été retenus. Une séquence binaire aléatoire a ainsi été générée 150 qui satisfait 13 des 15 tests de référence connus sous la référence NIST 800-22, avec un taux d'échantillonnage environ égal à 10 kbits/sec.

L'invention n'est pas limitée aux modes de réalisations précédemment décrits et s'étend à tous les modes de réalisation couverts par les revendications.

Par exemple, l'étape de démodulation 135 peut également être réalisée après la conversion 140 du signal analogique 102, sur le signal numérique issu de la conversion 140.

Par exemple, seul l'un parmi le signal analogique 1021 et le signal analogique 1022 peut suffire à la génération 150 d'une séquence de nombres aléatoires vrais. Auquel cas, l'opération logique 156 n'est pas réalisée et l'étape de découpe (non représentée) consiste à découper l'une correspondante parmi les deux séries de bits 1041 et 1042.

Par exemple, le dispositif d'excitation 11 du système d'excitation 10 destiné à être intégré dans un microsystème électromécanique 1 comprenant un résonateur 2 pour son utilisation à la génération 150 d'une séquence de nombres aléatoires vrais à partir dudit signal analogique 102 peut ne jouer que le rôle de modulation 120 du signal d'excitation, ce dernier étant généré par un ou plusieurs composants équipant déjà le micro système électromécanique 1.

Par exemple, les valeurs de fréquence de résonance f₀ et de facteurs de qualité Q données ci-dessus sont largement modulables chacune dans un ensemble de gamme de valeurs disponible, soit environ 200 Hz à 10 GHz pour la fréquence de résonance f₀ et environ de 10 à 10⁶ pour le facteur de qualité Q, sans pour autant altérer la possibilité de mise en œuvre de l'invention. La force d'excitation appliquée au résonateur 2 et la non-linéarité du comportement du résonateur 2 induit par cette force d'excitation peuvent varier par rapport aux valeurs indiquées ci-dessus de sorte à retrouver un système équivalent à celui étudié pour démontrer la faisabilité de l'invention. De même, les conditions initiales dans lesquelles le résonateur 2 se trouve peuvent varier ; par exemple, le résonateur 2 peut être placé sous une pression égale à 1 bar. En outre, le taux d'échantillonnage dépend des paramètres du résonateur 2 considéré ; il peut facilement varier entre 1bit/sec et 1Mbits/sec en fonction de la fréquence de résonance f₀, du facteur de qualité Q et de l'étendue du domaine de fréquence 111.

## Revendications

1. Système d'excitation (10) pour un composant physique résonant (2), le système (10) comprenant un dispositif d'excitation (11) configuré pour :
- Exciter (110) le composant physique résonant (2) avec un signal d'excitation déterminé pour amener le composant physique résonant (2) dans un régime de multi-stabilité dynamique, et
- Moduler (120) le signal d'excitation,
de sorte que le composant physique résonant (2) ait un comportement chaotique et qu'un signal analogique (102) issu du composant physique résonant (2) soit représentatif du comportement chaotique du composant physique résonant (2), le système d'excitation (10) étant exempt d'une boucle de rétroaction.

2. Système d'excitation (10) selon la revendication précédente, destiné à être intégré dans un microsystème électromécanique (1) comprenant un composant physique résonant (2) pour son utilisation à la génération (150) d'une séquence de nombres aléatoires vrais à partir dudit signal analogique (102).

3. Système d'excitation (10) selon l'une quelconque des revendications précédentes, comprenant en outre un dispositif de démodulation (14) configuré pour mettre en œuvre l'une ou l'autre des étapes suivantes :
- avant la conversion (140) du signal analogique (102), une démodulation (135) du signal analogique (102) à la fréquence f du signal d'excitation, et
- après la conversion (140) du signal analogique (102), une démodulation du signal numérique à la fréquence f du signal d'excitation.

4. Générateur physique chaotique (1) de nombres aléatoires vrais comprenant :
- Un composant physique résonant (2),
- Un convertisseur analogique/numérique (12) configuré pour convertir un signal analogique (102) issu du composant physique résonant (2) en un signal numérique (104) représentatif du signal analogique,
- Un dispositif de traitement numérique (13) configuré pour générer une séquence de nombres aléatoires vrais à partir dudit signal numérique (104), **caractérisé en ce que** le générateur (1) comprend en outre un dispositif d'excitation (11) du composant physique résonant (2) configuré pour :
- Exciter (110) le composant physique résonant (2) avec un signal d'excitation déterminé pour amener le composant physique résonant (2) dans un régime de multi-stabilité dynamique, et
- moduler (120) le signal d'excitation,
de sorte que le composant physique résonant (2) ait un comportement chaotique et que le signal analogique (102) à convertir soit représentatif du comportement chaotique du composant physique résonant (2),
le dispositif d'excitation (11) étant exempt d'une boucle de rétroaction.

5. Générateur (1) selon la revendication précédente, dans lequel le signal analogique (102) à convertir est représentatif des changements d'amplitude et/ou de phase de vibration du composant physique résonant (2) excité par le signal d'excitation modulé (101).

6. Générateur (1) selon l'une quelconque des deux revendications précédentes, dans lequel ledit régime de multi-stabilité dynamique est un régime de bi-stabilité dynamique non-linéaire dit de Duffing.

7. Générateur (1) selon l'une quelconque des trois revendications précédentes, dans lequel ledit signal d'excitation présente une tension de crête comprise entre 0,01 et 10V et une fréquence f égale à la fréquence de résonance f₀ du composant physique résonant (2) à plus ou moins 20% près.

8. Générateur (1) selon l'une quelconque des quatre revendications précédentes, dans lequel ledit signal d'excitation modulé (101) présente une fréquence de modulation δf supérieure au rapport f₀/Q de la fréquence de résonance f₀ du composant physique résonant (2) par son facteur de qualité Q.

9. Générateur (1) selon l'une quelconque des cinq revendications précédentes, dans lequel le composant physique résonant (2) comprend un micro/nano-résonateur, tel qu'une micro/nano-poutre doublement encastrée.

10. Procédé de génération (100) de nombres aléatoires vrais comprenant les étapes suivantes :
- Excitation (110) d'un composant physique résonant (2) avec un signal d'excitation déterminé pour amener le composant physique résonant (2) dans un régime de multi-stabilité dynamique,
- Modulation (120) du signal d'excitation, de sorte que le composant physique résonant (2) ait un comportement chaotique,
Les étapes d'excitation (110) et de modulation (120) étant mises en œuvre par un dispositif d'excitation (11) exempt d'une boucle de rétroaction,
- Acquisition (130) d'un signal analogique (102), issu du composant physique résonant (2) et représentatif du comportement chaotique du composant physique résonant (2),
- Conversion (140) du signal analogique (2) en un signal numérique (104) représentatif du signal analogique (102) acquis, puis
- Génération (150) à partir dudit signal numérique (104) d'une séquence de nombres aléatoires vrais.

11. Procédé (100) selon la revendication précédente, dans lequel le signal d'excitation est paramétré pour amener le composant physique résonant (2) dans un régime de bi-stabilité dynamique non-linéaire dit de Duffing.

12. Procédé (100) selon l'une quelconque des deux revendications précédentes, dans lequel, le régime de multi-stabilité dynamique du composant physique résonant (2) étant associé à un domaine de fréquence (111) continu et limité, la fréquence *f* du signal d'excitation est déterminée pour amener le composant physique résonant (2) dans un sous-régime du régime de multi-stabilité dynamique, ledit sous-régime étant associé à une première moitié, voire à un premier tiers, du domaine de fréquence associé au régime de multi-stabilité dynamique du composant physique résonant (2).

13. Procédé (100) selon l'une quelconque des trois revendications précédentes, dans lequel le signal d'excitation est modulé (120) avec une fréquence de modulation δf supérieure au rapport f₀/Q de la fréquence de résonance f₀ du composant physique résonant (2) par son facteur de qualité Q.

14. Produit programme d'ordinateur comprenant des instructions, qui lorsqu'elles sont effectuées par au moins un processeur, exécute au moins les étapes du procédé de génération (100) de nombres aléatoires vrais selon l'une quelconque des revendications 10 à 13.

15. Microsystème électromécanique (1) comprenant un composant physique résonant (2), un convertisseur analogique/numérique (12) et un dispositif de traitement numérique (13), **caractérisé en ce qu'**il comprend en outre un dispositif d'excitation (11) configuré pour exciter le composant physique résonant (2) de sorte à former un générateur physique chaotique (1) de nombres aléatoires vrais selon l'une quelconque des revendications 4 à 9.

## Patentansprüche

1. Erregersystem (10) für eine physikalische Resonanzkomponente (2), wobei das System (10) eine Erregervorrichtung (11) umfasst, die für Folgendes konfiguriert ist:
- Anregen (110) der physikalischen Resonanzkomponente (2) mit einem bestimmten Erregersignal, um die physikalische Resonanzkomponente (2) in einen Zustand dynamischer Multistabilität zu bringen, und
- Modulieren (120) des Erregersignals,
so dass die physikalische Resonanzkomponente (2) ein chaotisches Verhalten aufweist und ein analoges Signal (102), das von der physikalischen Resonanzkomponente (2) stammt, repräsentativ für das chaotische Verhalten der physikalischen Resonanzkomponente (2) ist,
wobei das Erregersystem (10) frei von einer Rückkopplungsschleife ist.

2. Erregersystem (10) nach dem vorhergehenden Anspruch, das zur Integration in ein elektromechanisches Mikrosystem (1) bestimmt ist, das eine physikalische Resonanzkomponente (2) zur Verwendung beim Generieren (150) einer Sequenz wahrer Zufallszahlen aus dem analogen Signal (102) umfasst.

3. Erregersystem (10) nach einem der vorhergehenden Ansprüche, ferner umfassend eine Demodulationsvorrichtung (14), die so konfiguriert ist, dass sie einen der folgenden Schritte umsetzt:
- vor dem Umwandeln (140) des analogen Signals (102), Demodulieren (135) des analogen Signals (102) auf die Frequenz f des Erregersignals, und
- nach dem Umwandeln (140) des analogen Signals (102), Demodulieren des digitalen Signals auf die Frequenz f des Erregersignals.

4. Physikalischer Chaos-Generator (1) für wahre Zufallszahlen, umfassend:
- eine physikalische Resonanzkomponente (2),
- einen Analog/Digital-Wandler (12), der so konfiguriert ist, dass er ein von der physikalischen Resonanzkomponente (2) stammendes analoges Signal (102) in ein für das analoge Signal repräsentatives digitales Signal (104) umwandelt,
- eine digitale Verarbeitungsvorrichtung (13), die so konfiguriert ist, dass sie aus dem digitalen Signal (104) eine Sequenz wahrer Zufallszahlen generiert,
**dadurch gekennzeichnet, dass** der Generator (1) ferner eine Erregervorrichtung (11) der physikalischen Resonanzkomponente (2) umfasst, die für Folgendes konfiguriert ist:
- Anregen (110) der physikalischen Resonanzkomponente (2) mit einem bestimmten Erregersignal, um die physikalische Resonanzkomponente (2) in einen Zustand dynamischer Multistabilität zu bringen, und
- Modulieren (120) des Erregersignals,
so dass die physikalische Resonanzkomponente (2) ein chaotisches Verhalten aufweist und das umzuwandelnde Analogsignal (102) repräsentativ für das chaotische Verhalten der physikalischen Resonanzkomponente (2) ist,
wobei die Erregervorrichtung (11) frei von einer Rückkopplungsschleife ist.

5. Generator (1) nach dem vorhergehenden Anspruch, wobei das umzuwandelnde analoge Signal (102) repräsentativ für die Änderungen der Schwingungsamplitude und/oder -phase der physikalischen Resonanzkomponente (2) ist, die durch das modulierte Erregersignal (101) angeregt wird.

6. Generator (1) nach einem der beiden vorhergehenden Ansprüche, wobei der Zustand dynamischer Multistabilität ein Zustand nichtlinearer dynamischer Bisstabilität, ein sogenannter Duffing-Zustand, ist.

7. Generator (1) nach einem der drei vorhergehenden Ansprüche, wobei das Erregersignal eine Spitzenspannung zwischen 0,01 und 10 V und eine Frequenz f aufweist, die der Resonanzfrequenz f₀ der physikalischen Resonanzkomponente (2) um plus oder minus 20 % entspricht.

8. Generator (1) nach einer der vier vorhergehenden Ansprüche, wobei das modulierte Erregersignal (101) eine Modulationsfrequenz δf aufweist, die höher ist als das Verhältnis f₀/Q der Resonanzfrequenz f₀ der physikalischen Resonanzkomponente (2) zu ihrem Qualitätsfaktor Q.

9. Generator (1) nach einem der fünf vorhergehenden Ansprüche, wobei die physikalische Resonanzkomponente (2) einen Mikro-/Nano-Resonator, wie einen doppelt eingebetteten Mikro-/Nanoträger, umfasst.

10. Verfahren zum Generieren (100) wahrer Zufallszahlen, umfassend die folgenden Schritte:
- Anregen (110) einer physikalischen Resonanzkomponente (2) mit einem bestimmten Erregersignal, um die physikalische Resonanzkomponente (2) in einen Zustand dynamischer Multistabilität zu bringen,
- Modulieren (120) des Erregersignals, so dass die physikalische Resonanzkomponente (2) ein chaotisches Verhalten aufweist,
wobei die Erregerschritte (110) und die Modulationsschritte (120) durch eine Erregervorrichtung (11) ohne Rückkopplungsschleife ausgeführt werden,
- Erfassen (130) eines analogen Signals (102), das von der physikalischen Resonanzkomponente (2) stammt und repräsentativ für das chaotische Verhalten der physikalischen Resonanzkomponente (2) ist,
- Umwandeln (140) des analogen Signals (2) in ein digitales Signal (104), das für das erfasste analoge Signal (102) repräsentativ ist, dann
- Generieren (150) aus dem digitalen Signal (104) einer Sequenz wahrer Zufallszahlen.

11. Verfahren (100) nach dem vorhergehenden Anspruch, wobei das Erregersignal so parametriert ist, dass es die physikalische Resonanzkomponente (2) in einen Zustand nichtlinearer dynamischer Bistabilität, den sogenannten Duffing-Zustand, bringt.

12. Verfahren (100) nach einem der beiden vorhergehenden Ansprüche, wobei der Zustand dynamischer Multistabilität der physikalischen Resonanzkomponente (2) mit einem kontinuierlichen und begrenzten Frequenzbereich (111) verbunden ist, wobei die Frequenz *f* des Erregersignals bestimmt wird, um die physikalische Resonanzkomponente (2) in einen Teilzustand dynamischer Multistabilität zu bringen, wobei der Teilzustand mit einer ersten Hälfte oder sogar einem ersten Drittel des Frequenzbereichs verbunden ist, der dem Zustand dynamischer Mehrstabilität mit der physikalischen Resonanzkomponente (2) verbunden ist.

13. Verfahren (100) nach einem der vorhergehenden drei Ansprüche, wobei das Erregersignal (120) mit einer Modulationsfrequenz δf moduliert wird, die höher ist als das Verhältnis f₀/Q der Resonanzfrequenz f₀ der physikalischen Resonanzkomponente (2) zu ihrem Qualitätsfaktor Q.

14. Computerprogrammprodukt, das Anweisungen umfasst, die, wenn sie von mindestens einem Prozessor ausgeführt werden, mindestens die Schritte des Verfahrens zum Generieren (100) wahrer Zufallszahlen nach einem der Ansprüche 10 bis 13 ausführen.

15. Elektromechanisches Mikrosystem (1), das eine physikalische Resonanzkomponente (2), einen Analog/Digital-Wandler (12) und eine digitale Verarbeitungsvorrichtung (13) umfasst, **dadurch gekennzeichnet, dass** es ferner eine Erregervorrichtung (11) umfasst, die so konfiguriert ist, dass sie die physikalische Resonanzkomponente (2) so anregt, dass sie einen physikalischen Chaos-Generator (1) für wahre Zufallszahlen nach einem der Ansprüche 4 bis 9 bildet.

## Claims

1. A system (10) for exciting a resonant physical component (2), the system (10) comprising an excitation device (11) configured to:
- Excite (110) the resonant physical component (2) with a determined excitation signal to set the resonant physical component (2) into a dynamic multi-stability regime, and
- Modulate (120) the excitation signal,
so that the resonant physical component (2) has a chaotic behaviour and that an analog signal (102) originating from the resonant physical component (2) is representative of the chaotic behaviour of the resonant physical component (2),
the excitation system (10) having no feedback loop.

2. The excitation system (10) according to the preceding claim, to be integrated into a micro-electromechanical system (1) comprising a resonant physical component (2) for use thereof in generating (150) a sequence of true random numbers from said analog signal (102).

3. The excitation system (10) according to any one of the preceding claims, further comprising a demodulation device (14) configured to implement either one of the following steps of:
- before converting (140) the analog signal (102), demodulating (135) the analog signal (102) at the frequency f of the excitation signal, and
- after converting (140) the analog signal (102), demodulating the digital signal at the frequency f of the excitation signal.

4. A chaotic physical true random number generator (1) comprising:
- A resonant physical component (2),
- An analog-to-digital converter (12) configured to convert an analog signal (102) originating from the resonant physical component (2) into a digital signal (104) representative of the analog signal,
- A digital processing device (13) configured to generate a sequence of true random numbers from said digital signal (104),
**characterised in that** the generator (1) further comprises an excitation device (11) of the resonant physical component (2) configured to:
- Excite (110) the resonant physical component (2) with a determined excitation signal to set the resonant physical component (2) into a dynamic multi-stability regime, and
- modulate (120) the excitation signal,
so that the resonant physical component (2) has a chaotic behaviour and that the analog signal (102) to be converted is representative of the chaotic behaviour of the resonant physical component (2),
the excitation device (11) having no feedback loop.

5. The generator (1) according to the preceding claim, wherein the analog signal (102) to be converted is representative of the changes in amplitude and/or phase of vibration of the resonant physical component (2) excited by the excitation signal (101) modulated.

6. The generator (1) according to any one of the preceding two claims, wherein said dynamic multi-stability regime is a so-called Duffing non-linear dynamic bistability regime.

7. The generator (1) according to any one of the preceding three claims, wherein said excitation signal has a peak voltage of between 0.01 and 10V and a frequency f equal to the resonance frequency f₀ of the resonant physical component (2) within 20%.

8. The generator (1) according to any one of the preceding four claims, wherein said modulated excitation signal (101) has a modulation frequency δf higher than the ratio f₀/Q of the resonance frequency f₀ of the resonant physical component (2) to its quality factor Q.

9. The generator (1) according to any one of the preceding five claims, wherein the resonant physical component (2) comprises a micro/nano-resonator, such as a double-embedded micro/nano-beam.

10. A method for generating (100) true random numbers comprising the following steps of:
- Exciting (110) a resonant physical component (2) with a determined excitation signal to set the resonant physical component (2) into a dynamic multi-stability regime,
- Modulating (120) the excitation signal, so that the resonant physical component (2) has a chaotic behaviour,
The excitation (110) and modulation (120) steps being implemented by an excitation device (11) having no feedback loop,
- Acquiring (130) an analog signal (102), originating from the resonant physical component (2) and representative of the chaotic behaviour of the resonant physical component (2),
- Converting (140) the analog signal (2) into a digital signal (104) representative of the analog signal (102) acquired, then
- Generating (150) a sequence of true random numbers from said digital signal (104).

11. The method (100) according to the preceding claim, wherein the excitation signal is parameterised to bring the resonant physical component (2) into a so-called Duffing non-linear dynamic bistability regime.

12. The method (100) according to any one of the preceding two claims, wherein, the dynamic multi-stability regime of the resonant physical component (2) being associated with a continuous, limited frequency domain (111), the frequency f of the excitation signal is determined to bring the resonant physical component (2) into a sub-regime of the dynamic multi-stability regime, said sub-regime being associated with a first half, and possibly a first third, of the frequency domain associated with the dynamic multi-stability regime of the resonant physical component (2).

13. The method (100) according to any one of the preceding three claims, wherein the excitation signal is modulated (120) with a modulation frequency δf higher than the ratio f₀/Q of the resonance frequency f₀ of the resonant physical component (2) to its quality factor Q.

14. A computer program product comprising instructions, which when performed by at least one processor, executes at least the steps of the true random number generation method (100) according to any one of claims 10 to 13.

15. A micro-electromechanical system (1) comprising a resonant physical component (2), an analog-to-digital converter (12) and a digital processing device (13), **characterised in that** it further comprises an excitation device (9) configured to excite the resonant physical component (2) so as to form a chaotic physical true random number generator (1) according to any one of claims 4 to 9.
